Europäisches Patentamt

European Patent Office

Office européen des brevets

(19)

(11) Numéro de publication : **0 064 113**
**B1**

(12) **FASCICULE DE BREVET EUROPÉEN**

(45) Date de publication du fascicule du brevet :
28.11.84

(51) Int. Cl.³ : **A 01 D 85/00, A 01 F 15/00**

(21) Numéro de dépôt : 81400715.9

(22) Date de dépôt : 06.05.81

(54) **Dispositif de commande de liage pour presses à balles cylindriques.**

(43) Date de publication de la demande :
10.11.82 Bulletin 82/45

(45) Mention de la délivrance du brevet :
28.11.84 Bulletin 84/48

(84) Etats contractants désignés :
DE FR GB IT NL

(56) Documents cités :
DE-A- 2 640 563
FR-A- 2 457 636
US-A- 2 410 159
US-A- 2 829 585

(73) Titulaire : **JOHN DEERE (Société Anonyme)**
**8, Quai de la Madeleine**
**F-45000 Orléans (FR)**

(72) Inventeur : **Diot, Joel André**
**Les Crayes**
**F-70100 Chargey-les-Gray (FR)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

EP 0 064 113 B1

## Description

La présente invention concerne d'une façon générale les presses à balles cylindriques ou rondes et plus particulièrement un dispositif de commande de liage pour les presses de ce type.

Les presses à balles cylindriques sont d'un type général bien connu. Elles comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un dispositif comprenant un organe guide-ficelle déplacé pendant l'opération de liage en un mouvement de va-et-vient transversalement à la presse, par exemple devant l'orifice d'entrée des produits récoltés à partir du champ. La ficelle, qui provient d'une réserve appropriée, est guidée par cet organe et son extrémité est saisie par les produits de récolte constituant la balle à la fin de l'opération de formation de celle-ci, de sorte qu'elle est enroulée autour de cette balle sous l'effet de la rotation de cette dernière entre les bandes ou courroies et que ce mouvement d'enroulement se conjugue à une répartition des spires de ficelle ainsi formées sur la longueur de la balle du fait du mouvement de balayage transversal résultant du déplacement de l'organe guide-ficelle.

Divers moyens ont déjà été proposés pour commander le mouvement de balayage transversal de l'organe guide-ficelle. Ainsi (DE-A-2 640 563), il est connu de provoquer le mouvement requis sous l'effet de la traction exercée sur la ficelle de liage lors de son enroulement autour de la balle, la ficelle passant alors sur une poulie qui est entraînée ainsi en rotation et qui provoque le déplacement du bras guide-ficelle. Selon DE-A-2 640 563, cet entraînement est assuré par un mécanisme démultiplicateur prévu entre la poulie et une came qui agit sur le bras guide-ficelle monté de façon pivotante, ce qui représente un agencement relativement complexe.

Il est également connu (US-A-2 410 159), dans un dispositif de ce type général, de maintenir le bras guide-ficelle dans sa position finale par verrouillage et de le rappeler brusquement à sa position de départ par des moyens élastiques. Le bras guide-ficelle est ensuite déplacé positivement de cette position de départ vers cette position finale par un lent mouvement de balayage. Selon ce brevet US-A-2 410 159, le déplacement positif du bras guide-ficelle est assuré cette fois encore par un jeu d'engrenages et une came.

Dans chaque cas, la ficelle provenant d'une boîte à ficelle ou réserve équivalente prévue sur la presse passe à l'intérieur d'un bras tubulaire monté de façon pivotante, par lequel elle est guidée jusque devant l'orifice d'entrée des produits de récolte dans la presse.

L'invention concerne les dispositifs du type précité et elle a pour but de créer un dispositif assurant, par des moyens simples, une commande fiable du mouvement de balayage requis.

L'invention est matérialisée en conséquence dans un dispositif de commande de liage pour presses à balles cylindriques ou rondes, du type comprenant un bras guide-ficelle monté de façon pivotante dans une position telle que son extrémité libre puisse effectuer un mouvement de balayage transversal relativement à la chambre de formation de la balle de la presse, entre une position de départ vers laquelle ce bras est sollicité par des moyens élastiques et une position finale dans laquelle il est amené positivement à partir de cette position de départ et dans laquelle il est normalement verrouillé au repos, et une poulie ou un organe analogue sur lequel la ficelle de liage est enroulée de façon à provoquer la rotation de cette poulie ou de cet organe analogue lorsqu'une traction est exercée sur cette ficelle par la balle au moment du liage, des moyens étant prévus pour provoquer le déplacement ou susdit mouvement de balayage du bras guide-ficelle sous l'action de cette poulie pendant cette opération de liage, caractérisé en ce que ces derniers moyens comprennent un arbre dont l'axe est parallèle à l'axe de pivotement du bras guide-ficelle ou coïncide avec ce dernier axe, au moins un bras d'entrainement porté par cet arbre et entraîné en rotation avec lui, ce bras étant indépendant du bras guide-ficelle, des moyens d'entraînement prévus entre cette poulie et cet arbre pour provoquer la rotation de ce dernier lors de l'entraînement de la poulie sous l'action de la ficelle de liage, et des moyens établissant une liaison entre ce bras d'entraînement et le bras guide-ficelle lors de la rotation dudit arbre afin de provoquer le déplacement positif de ce bras guide-ficelle entre sa position de départ et sa position finale.

De façon préférentielle, l'axe de montage à pivotement du bras guide-ficelle coïncide avec l'arbre portant le ou les bras et est défini par un élément monté sur cet arbre.

Suivant un mode de réalisation paraissant judicieux, le bras guide-ficelle porte une butée constituée par exemple par une patte ou un élément analogue formant la liaison sus-mentionnée et le ou les bras d'entraînement portés par l'arbre sont montés dans une position telle qu'ils attaquent cette butée lors de la rotation de cet arbre pour provoquer le pivotement ou déplacement positif du bras guide-ficelle.

Etant donné que l'arbre d'entraînement est parallèle à l'axe de montage à pivotement du bras guide-ficelle ou coïncide avec ce dernier, les bras d'entraînement se déplacent, lors de la rotation de cet arbre, dans un plan parallèle au plan de pivotement du bras guide-ficelle, ce qui évite tout échappement de celui-ci par rapport à ces bras d'entraînement.

Suivant une autre particularité de l'invention, les moyens reliant la poulie ou l'organe analogue à l'arbre d'entraînement sont de type irréversible, de sorte que la rotation de cet arbre ne peut s'effectuer que dans un seul sens et qu'en conséquence le bras d'entraînement en prise avec la butée du bras guide-ficelle constitue un moyen de verrouillage de celui-ci pour son maintien en position de repos. Des moyens sont prévus pour, au moment du déclenchement de l'opération de liage, agir sur ce bras d'entraînement ou sur cette butée afin de provoquer l'échappement du bras guide-ficelle.

Les moyens reliant la poulie à l'arbre peuvent comporter un levier monté sur l'arbre d'entraînement par l'intermédiaire d'un accouplement à effet unidirectionnel et relié vers son extrémité libre à la poulie entraînée en rotation sous l'effet de la ficelle, par exemple au moyen d'une biellette reliée à un point excentré de cette poulie. L'accouplement à effet unidirectionnel peut être alors de tout type désiré, par exemple formé par une roue-libre à coincement, un dispositif à encliquetage ou analogue. Il en résulte, lors de la rotation de la poulie sous l'effet de la ficelle, un entraînement en rotation pas à pas de l'arbre, qui est communiqué aux bras pour commander le mouvement de pivotement requis du bras guide-ficelle. Le système peut être rendu irréversible en combinant à cet accouplement unidirectionnel un autre accouplement à effet unidirectionnel conjugué à l'arbre mais monté dans le châssis.

L'invention concerne encore les presses à balles cylindriques ou rondes équipées d'un dispositif du type susmentionné.

La description qui va suivre, faite en regard des dessins annexés, donnés à titre non limitatif, permettra de mieux comprendre l'invention.

La Figure 1 est une vue en perspective d'une presse à balles cylindriques équipée du dispositif suivant l'invention.

La Figure 2 est une représentation schématique partielle du dispositif qui fait plus spécialement l'objet de l'invention.

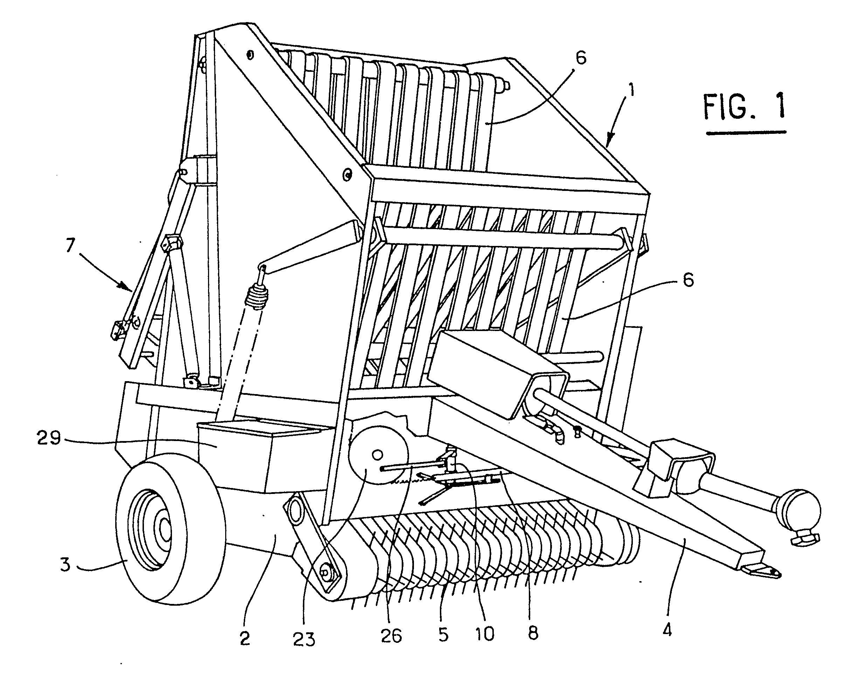

On a représenté sur la figure 1 une presse à balles cylindriques de type classique, comportant un corps 1 supporté par un châssis 2 équipé de roues 3, la presse étant destinée à être attelée à un tracteur au moyen d'un timon ou d'une flèche d'attelage 4. Un ramasseur indiqué en 5 est prévu de façon classique à la partie avant du corps 1 de la presse, de manière à ramasser les produits de récolte, tels que du fourrage, sur le champ et à les amener à un orifice ménagé de façon usuelle à la partie avant d'une chambre prévue à l'intérieur de la presse et dans laquelle une balle cylindrique ou ronde se forme par enroulement de la nappe de produits entre des bandes 6 entraînées dans le sens approprié. Quand la balle a atteint le diamètre requis, elle est soumise à une opération de liage au moyen d'une ficelle ou d'un lien analogue, avant son éjection hors de la presse par un système de porte arrière 7.

L'agencement des presses à balles cylindriques de ce type est bien connu.

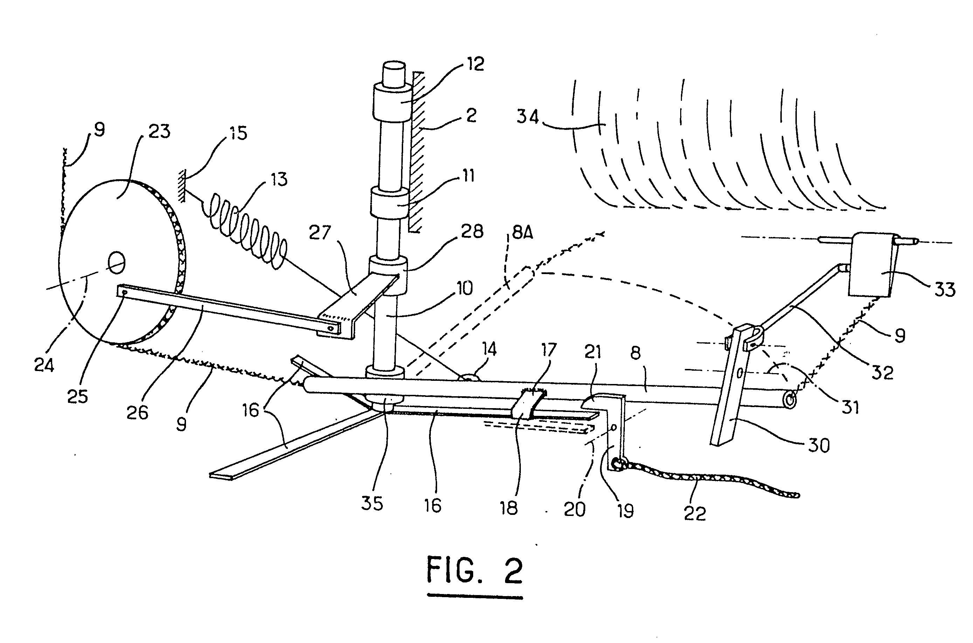

On décrira maintenant plus spécialement en regard de la figure 2 le dispositif suivant l'invention.

Sur cette figure 2, on a indiqué en 8 le bras tubulaire ou bras guide-ficelle de la presse, qui assure le guidage de la ficelle 9 pour le liage de la balle.

La presse considérée suivant l'invention est du type connu dans lequel le bras guide-ficelle 8 est monté à pivotement autour d'un axe sensiblement vertical, afin d'effectuer par son extrémité libre un mouvement de balayage transversal devant l'orifice d'entrée des produits de récolte dans la presse, pour assurer le guidage de la ficelle en vue de réaliser le liage de la balle par des spires de ficelle réparties sur la longueur de cette balle.

Le bras guide-ficelle 8 est, dans le cas présent, monté de façon à pouvoir tourner librement, par exemple par un moyeu 35, sur un arbre sensiblement vertical 10 qui constitue ainsi l'axe de pivotement de ce bras guide-ficelle 8. Cet arbre 10 est monté à rotation dans des paliers 11, 12 supportés de toute manière appropriée par le châssis 2 de la presse. On a indiqué schématiquement en 13 un ressort qui attaque le bras guide-ficelle 8 en 14 et qui est relié par ailleurs à un point fixe 15 du châssis de la presse, afin de solliciter ce bras guide-ficelle de manière à l'amener de sa position de repos représentée en traits pleins sur la figure 2 jusqu'à sa position de départ indiquée en 8A, comme décrit plus loin.

Suivant l'invention, l'arbre 10 porte à son extrémité inférieure des bras d'entraînement 16. Ces bras s'étendent radialement dans des directions perpendiculaires à l'axe de l'arbre 10, c'est-à-dire que, lors de la rotation de cet arbre 10, ces bras 16 se déplacent dans un plan qui est parallèle au plan de balayage du bras guide-ficelle 8. Il est prévu dans le cas présent trois bras d'entraînement, pour une raison qui sera indiquée plus loin.

Le bras guide-ficelle 8 porte, en un point de sa longueur, une patte formant butée 17, munie d'un bec 18 dirigé vers le bas, s'étendant jusque dans le plan de rotation des bras d'entraînement 16, de sorte qu'au cours de la rotation de l'arbre 10, ces bras 16 viennent attaquer le bec 18 de cette butée 17 pour assurer l'entraînement du bras guide-ficelle 8 comme décrit plus loin.

Les bras 16 présentent une certaine flexibilité, afin de pouvoir se déformer vers le bas sous l'effet d'une force exercée à leur extrémité. Il est prévu à cet effet sur la presse un linguet 19 monté à pivotement autour d'un axe 20 et muni d'un bec 21 qui se trouve au-dessus du bras 16 dans la position de repos de l'ensemble du dispositif. Un cordon 22 relié d'une part au linguet 19 est raccordé d'autre part à un organe d'actionnement qui peut être un organe placé à portée du conducteur du tracteur ou un organe déplacé automatiquement quand la balle a atteint le diamètre requis dans la presse, de façon telle qu'une traction soit alors exercée sur le cordon 22 pour déclencher l'opération de liage comme décrit plus loin.

Il est prévu, sur le châssis 2 de la presse, une poulie 23 montée à rotation autour d'un axe 24 et dont un point excentré 25 est relié par une biellette 26 à un levier 27 porté par la bague extérieure d'un accouplement à effet unidirectionnel tel qu'un accouplement à roue-libre ou à encliquetage 28 monté sur l'arbre 10 et dont la bague ou l'élément intérieur est rendu solidaire de cet arbre.

Le système est rendu irréversible en utilisant pour former par exemple le palier 11, un accouplement à effet unidirectionnel monté dans le châssis en parallèle avec l'accouplement 28, ce qui évite tout retour en arrière de l'arbre 10 entraîné par cet accouplement 28. Comme cela apparaît sur la figure 2, la ficelle 9 provenant d'une boîte à ficelle 29 (Fig. 1) prévue de la façon habituelle sur la presse est enroulée autour de la poulie 23 avant de rejoindre l'extrémité du bras guide-ficelle 8. Cette ficelle traverse ce bras 8 pour sortir par son extrémité libre.

Un levier à deux bras 30 est monté de façon pivotante sur la presse autour d'un axe 31, un bras de ce levier 30 étant situé dans la trajectoire de balayage du bras guide-ficelle 8, de façon telle que vers la fin de sa course de balayage transversal ce bras 8 vienne buter contre le levier 30 pour provoquer son basculement. L'autre bras de ce levier 30 est relié par une tige 32 à un couteau 33 conjugué à une enclume de la manière habituelle, de façon à retenir en position de repos l'extrémité libre de la ficelle 9 comme montré sur la figure 2.

On décrira maintenant le fonctionnement du dispositif qui fait l'objet de l'invention.

Sur la figure 2, on a indiqué schématiquement en 34 la balle formée à l'intérieur de la chambre de la presse 1. Quand cette balle a atteint le diamètre requis, une traction est exercée sur le cordon 22, soit par le conducteur du tracteur, soit par le dispositif automatique de déclenchement de l'opération de liage. Sous l'effet de cette traction, le linguet 19 pivote dans le sens anti-horaire autour de son axe 20 et son bec vient alors appuyer sur l'extrémité libre du bras 16 engagé sous le bec 17, ces différents organes occupant à ce moment avec le bras guide-ficelle 8 la position indiquée en traits pleins sur la figure 2. Sous l'effet de la force exercée, le bras 16 se déforme comme indiqué en pointillé et échappe au bec 18 de la butée 17. Le bras guide-ficelle 8 est alors libéré et, sous l'action du ressort 13, il passe de sa position de repos indiquée en traits pleins à sa position de départ montrée en pointillé en 8A, dans laquelle son extrémité libre se trouve en face de l'extrémité droite de la balle formée dans la chambre de la presse. Au début du mouvement de pivotement du bras 8, le levier 30 est libéré et, sous l'action du ressort (non représenté) il pivote autour de l'axe 31 pour soulever le couteau 33 par l'intermédiaire de la tige 32. Ceci libère l'extrémité libre de la ficelle 9 qui était retenue entre ce couteau 33 et l'enclume conjuguée.

L'extrémité libre de cette ficelle pend alors devant l'orifice d'entrée des produits de récolte dans la chambre de la balle et elle est entraînée par ces produits d'une manière en soi connue, ce qui exerce une traction sur la ficelle pour la prélever à la boîte à ficelle 29. Etant donné que la ficelle 9 passe autour de la poulie 23, cet appel fait tourner cette poulie 23 dans le sens horaire autour de son axe 24. Compte tenu de l'excentration du point 25 d'attaque de la biellette 26 sur la poulie 23, il en résulte un déplacement du levier 27 autour de l'arbre 10 ce qui, par l'intermédiaire de l'accouplement unidirectionnel 28, fait tourner cet arbre 10 dans le sens horaire par un mouvement pas à pas, son retour en arrière étant empéché par l'accouplement unidirectionnel 11. Il résulte de cette rotation un déplacement de bras 16 autour de l'axe de cet arbre 10, et l'un des bras 16 vient attaquer le bec 18 de la butée 17 portée par le bras guide-ficelle 8, pour assurer l'entraînement de ce bras guide-ficelle 8 autour de son axe de pivotement constitué par l'arbre 10, en un lent mouvement de balayage transversal, en direction de la position indiquée en traits pleins sur la Fig. 2 La présence de plusieurs bras 16 à l'extrémité de l'arbre 10 permet de limiter la course à vide de cet arbre 10 avant l'attaque du bras guide-ficelle 8 occupant la position 8A à une valeur suffisante pour former, à l'extrémité de la balle, au moins une spire d'arrêt de la ficelle, sans toutefois une perte de temps ou de longueur de ficelle trop importante.

Quand le bras guide-ficelle 8 atteint sensiblement sa position de fin de course ou position de repos indiquée en traits pleins, son extrémité agit sur le levier 30, ce qui fait basculer ce dernier autour de son axe 31 pour actionner le couteau 33, qui sectionne la ficelle et retient son extrémité entre ce couteau et l'enclume associée. Du fait de ce sectionnement, aucune traction n'est plus exercée sur la ficelle, de sorte que la poulie 23 s'arrête avec l'ensemble des organes mobiles du dispositif. La condition est alors celle indiquée en traits pleins sur la Fig. 2 et la balle dont le liage est terminé peut être éjectée par la porte arrière de la presse. Le dispositif est immobilisé dans cette position du fait de la retenue du bras guide-ficelle 8 par le bec 18 de la butée 17 et du caractère irréversible du système de transmission et de montage de l'arbre 10 portant les bras 16.

Des modifications peuvent être apportées au mode de réalisation décrit, dans le domaine des équivalences techniques, sans s'écarter de l'invention.

**Revendications**

1. Dispositif de commande de liage pour presses à balles cylindriques ou rondes, du type comprenant un bras guide-ficelle (8) monté de façon pivotante dans une position telle que son extrémité libre puisse effectuer un mouvement de balayage transversal relativement à la chambre de formation de la balle de la presse, entre une position de départ vers laquelle ce bras est sollicité par des moyens élastiques (13) et une position finale dans laquelle il est amené positivement à partir de cette position de départ et dans laquelle il est normalement verrouillé au repos, et une poulie (23) ou un organe analogue sur lequel la ficelle de liage (9) est enroulée de façon à provoquer la rotation de cette poulie ou de cet organe analogue lorsqu'une traction est exercée sur cette ficelle par la balle (34) au moment du liage, des moyens étant prévus pour provoquer le déplacement ou susdit mouvement de balayage du bras guide-ficelle sous l'action de cette poulie pendant cette opération de liage, caractérisé en ce que ces derniers moyens comprennent un arbre (10) dont l'axe est parallèle à l'axe de pivotement du bras guide-ficelle (8) ou coïncide avec ce dernier axe, au moins un bras d'entraînement (16) porté par cet arbre et entraîné en rotation avec lui, ce bras (16) étant indépendant du bras guide-ficelle (8), des moyens d'entraînement (26-28) prévus entre cette poulie (23) et cet arbre (10) pour provoquer la rotation de ce dernier lors de l'entraînement de la poulie sous l'action de la ficelle de liage et des moyens (17, 18) établissant une liaison entre ce bras d'entraînement (16) et le bras guide-ficelle (8) lors de la rotation dudit arbre (10), afin de provoquer le déplacement positif de ce bras guide-ficelle (8) entre sa position de départ et sa position finale.

2. Dispositif suivant la revendication 1, caractérisé en ce que l'axe de montage à pivotement du bras guide-ficelle (8) coïncide avec l'arbre (10) portant le ou les bras (16) et est défini par un élément (35) monté sur cet arbre (10).

3. Dispositif suivant la revendication 1 ou 2, caractérisé en ce que le bras guide-ficelle (8) porte une butée constituée par une patte (17, 18) ou un élément analogue formant la liaison susmentionnée et en ce que le ou les bras d'entraînement (16) portés par l'arbre (10) sont montés dans une position telle qu'ils attaquent cette butée de la rotation de cet arbre (10) pour provoquer le pivotement ou déplacement positif du bras guide-ficelle (8).

4. Dispositif suivant la revendication 1, 2 ou 3, caractérisé en ce que les moyens d'entraînement (26-28) reliant la poulie (23) ou l'organe analogue à l'arbre d'entraînement (10) sont de type irréversible, ce qui assure l'entraînement unidirectionnel du bras guide-ficelle (8) et son verrouillage en position finale.

5. Dispositif suivant la revendication 4, caractérisé en ce que des moyens sont prévus pour assurer l'échappement du bras guide-ficelle (8) par rapport au bras d'entraînement (16) au début de l'opération de liage.

6. Dispositif suivant la revendication 5, caractérisé en ce que le bras guide-ficelle (8) porte une butée (17) munie d'un bec (18) contre lequel le bras d'entraînement (16) est appliqué, ce bras étant flexible et des moyens tels qu'un linguet (19) ou analogue étant montés au voisinage de l'extrémité libre du bras d'entraînement (16) pour provoquer sa déformation et son échappement par rapport au bec (18) de la butée (17) au début de l'opération de liage.

7. Dispositif suivant l'une quelconque des revendications précédentes, caractérisé en ce que l'arbre (10) porte un levier (27) monté sur lui par l'intermédiaire d'un accouplement à effet unidirectionnel (28) et en ce que ce levier (27) est relié par une biellette ou analogue (26) à un point excentré (25) de la poulie (23), pour commander la rotation pas à pas de cet arbre (10) par l'intermédiare du système à excentrique ainsi formé et de l'accouplement (28).

8. Dispositif suivant la revendication 7, caractérisé en ce que l'accouplement à effet undirectionnel est formé par une roue-libre à coincement, un dispositif à encliquetage ou analogue.

9. Dispositif suivant la revendication 7 ou 8, caractérisé en ce qu'il est prévu sur l'arbre (10) un second acouplement à effet unidirectionnel (11) monté en parallèle par rapport au premier accouplement (28) pour assurer l'irréversibilité du système.

10. Presse à balles cylindriques ou rondes équipées d'un dispositif suivant l'une quelconque des revendications 1 à 9.

## Claims

1. A binding control apparatus for cylindrical or round bale presses, of the type comprising a twine guide arm (8) mounted pivotally in a position such that the free end thereof can perform a transverse sweep movement relative to the bale forming chamber of the press between a starting position towards which said arm is urged by resilient means (13) and a final position into which it is positively moved from said starting position and in which it is normally locked in the rest condition, and a pulley (23) or like member around which the binding twine (9) is wound so as to cause rotary movement of said pulley or said like member when a pulling force is applied to said twine by the bale (34) at the moment of the binding operation, means being provided to produce the displacement or said sweep movement of the twine guide arm under the action of said pulley during said binding operation, characterised in that said latter means comprise a shaft (10) whose axis is parallel to the pivot axis of the twine guide arm (8) or coincides with said pivot axis, at least one entrainment arm (16) which is carried by said shaft and driven in rotation therewith, said arm (16) being independent of the twine guide arm (8), entrainment means (26-28) provided between said pulley (23) and said shaft (10) to cause rotary movement of the shaft when the pulley is entrained under the action of the binding twine, and means (17, 18) for making a connection between said entrainment arm (16) and the twine guide arm (8) upon rotary movement of said shaft (10) in order to produce positive displacement of said twine guide arm (8) between ist starting position and its final position.

2. Apparatus according to claim 1, characterized in that the pivot mounting axis of the twine guide arm (8) coincides with the shaft (10) carrying the arm or arms (16) and is defined by an element (35) mounted on said arm (10).

3. Apparatus according to claim 1 or claim 2, characterised in that the twine guide arm (8) carries an abutment formed by a lug (17, 18) or a similar element forming said connection, and that the entrainment arm or arms (16) carried by the shaft (10) are mounted in such a position that they engage said abutment upon rotary movement of said shaft (10) to cause pivotal movement or positive displacement of the twine guide arm (8).

4. Apparatus according to claim 1, claim 2 or claim 3, characterised in that the entrainment means (26-28) connecting the pulley (23) or like member to the entrainment shaft (10) are of irreversible type, thereby ensuring uni-directional entrainment of the twine guide arm (8) and locking thereof in the final position.

5. Apparatus according to claim 4, characterised in that means are provided to ensure that the twine guide arm (8) escapes from the entrainment arm (16) at the beginning of the binding operation.

6. Apparatus according to claim 5, characterised in that the twine guide arm (8) carries an abutment (17) provided with a catch portion (18) against which the entrainment arm (16) is applied, said arm being flexible and means such as a pawl (19) or the like being mounted in the vicinity of the free end of the entrainment arm (16) to cause deformation thereof and the escape thereof from the catch portion (18) of the abutment (17) at the beginning of the binding operation.

7. Apparatus according to any one of the preceding claims, characterised in that the schaft (10) carries a lever (27) mounted thereon by way a uni-directional action coupling means (28) and that said lever (27) is connected by a link (26) or the like to an eccentric point (25) on the pulley (23) to produce stepwise rotation of said shaft (10) by means of the eccentric system which is thus formed and the coupling means (28).

8. Apparatus according to claim 7, characterised in that the uni-directional action coupling means is formed by a wedge-action freewheel unit, a pawl-and-ratchet mechanism or the like.

9. Apparatus according to claim 7 or claim 8, characterised in that provided on the shaft (10) is a second uni-directional action coupling means (11) which is mounted in parallel with respect to the first coupling means (28) to provide for irreversibility of the system.

10. A cylindrical or round bale press provided with an apparatus according to any one of claims 1 to 9.

### Ansprüche

1. Vorrichtung zum Steuern des Bindevorganges für Pressen von zylindrischen oder runden Ballen des Typs, welcher einen Schnurführungsarm (8), der schwenkbar in einer Position derart montiert ist, dass sein freies Ende eine Streichbewegung quer gegenüber der Ballenbildungskammer der Presse ausführen kann, und zwar zwischen einer Ausgangstellung, auf die hin der Arm durch elastische Mittel (13) vorgespannt ist, und einer Endstellung, in welche er ausgehend von dieser Ausgangsstellung positiv gebracht wird und in der er normalerweise in Ruhestellung verriegelt ist, und eine Scheibe oder ein analoges Organ aufweist, auf welche die Bindeschnur (9) derart aufgerollt ist, dass sie eine Drehung dieser Scheibe oder des analogen Organes hervorruft, wenn ein Zug auf die Schnur durch den Ballen (34) im Augenblick der Bindung ausgeübt wird, wobei Mittel vorgesehen sind, um die Verlagerung oder die obengenannte Streichbewegung des Schnurführungsarmes unter der Wirkung dieser Scheibe während des Bindevorganges hervorzurufen, dadurch gekennzeichnet, dass die zuletzt genannten Mittel eine Welle (10), deren Achse parallel zur Schwenkachse des Schnurführungsarmes (8) verläuft oder mit der zuletzt genannten Achse zusammenfällt, wenigstens einen Mitnehmerarm (16), der durch die Welle getragen und mit dieser in Drehung mitgenommen wird, wobei der Arm (16) unabhängig von dem Schnurführungsarm (8) ist, Antriebsmittel (26-28), die zwischen dieser Scheibe (23) und dieser Welle (10) vorgesehen sind, um die Drehung der letzteren hervorzurufen, wenn die Scheibe unter der Wirkung der Bindeschnur angetrieben wird, und Mittel (17, 18) umfassen welche eine Verbindung zwischen dem Mitnehmerarm (16) und dem Schnurführungsarm (8), während der Drehung der genannten Welle (10) herstellen, um die positive Verstellung des Schnuführungsarmes (8) zwischen seiner Ausgangsstellung und seiner Endstellung hervorzurufen.

2. Vorrichtung nach Anspruch 1, dadurch gekennzeichnet, dass die Achse zur Schwenkmontage des Schnurführungsarmes (8) mit der Welle (10) zusammenfällt, welche den order die Arme (16) trägt, und durch ein Element (35) bestimmt wird, das auf dieser Welle (10) montiert ist.

3. Vorrichtung nach Anspruch 1 oder 2, dadurch gekennzeichnet, dass der Schnurführungsarm (8) einen Anschlag trägt, der durch eine Lasche (17, 18) oder ein analoges Element gebildet ist, welcher die oben erwähnte Verbindung bildet, und dass der oder die Mitnehmerarme (16), welche durch die Welle (10) getragen werden, in einer solchen Stellung montiert sind, dass sie an diesem Anschlag während der Drehung dieser Welle (10) angreifen um die Schwenkung oder positive Verlagerung des Schnurführungsarmes (8) hervorzurufen.

4. Vorrichtung nach Anspruch 1, 2 oder 3, dadurch gekennzeichnet, dass die Antriebsmittel (26 bis 28), welche die Scheibe (23) oder das analoge Organ mit der Antriebswelle (10) verbinden, vom nicht umkehrbaren Typ sind, derart, dass sie die Mitnahme des Schnurführungsarmes (8) in nur einer Richtung sowie seine Verriegelung in der Endstellung sicherstellen.

5. Vorrichtung nach Anspruch 4, dadurch gekennzeichnet, dass Mittel vorgesehen sind, um das Freiwerden des Schnurführungsarmes (8) in bezug auf den Mitnehmerarm (16) am Anfang des Bindevorganges sicherzustellen.

6. Vorrichtung nach Anspruch 5, dadurch gekennzeichnet, dass der Schnurführungsarm (8) einen Anschlag (17) trägt, der mit einer Nase (18) versehen ist, gegen die der Mitnehmerarm (16) angelegt, ist wobei der Arm flexibel ist, und Mittel wie eine Sperrklinke (19) oder ein analoges Element in der Nähe des freien Endes des Mitnehmerarmes (16) vorgesehen sind, um dessen Verformung und sein Freikommen von der Nase (18) des Anschlages (17) am Anfang des Bindevorganges hervorzurufen.

7. Vorrichtung nach irgendeinem der voranstehenden Ansprüche, dadurch gekennzeichnet, dass die Welle (10) einen Hebel (27) trägt, der auf dieser mit Hilfe einer nur in einer Richtung wirksamen Kupplung (28) montiert ist, und dass dieser Hebel (27) durch eine Stange (26) oder dergleichen mit einem exzentrisch liegenden Punkt (25) der Scheibe (23) verbunden ist, um die schrittweise Drehung dieser Welle (10) mit Hilfe des so gebildeten Exzentersystems und der Kupplung (28) zu steuern.

8. Vorrichtung nach Anspruch 7, dadurch gekennzeichnet, dass die nur in einer Richtung wirksame Kupplung durch ein Freilaufrad mit Klemmgesperre, ein Klinkenschaltwerk oder dergleichen gebildet wird.

9. Vorrichtung nach Anspruch 7 oder 8, dadurch gekennzeichnet, dass auf der Welle (10) eine zweite nur in einer Richtung wirkende Kupplung (11) vorgesehen ist, die in bezug auf die erste Kupplung (28) parallel montiert ist, um die Irreversibilität des Systems sicherzustellen.

10. Presse für zylindrische oder runde Ballen, die mit einer Vorrichtung nach irgendeinem der Ansprüche 1 bis 9 ausgerüstet ist.

FIG. 1

FIG. 2